(19) Europäisches Patentamt / European Patent Office / Office européen des brevets

(11) **EP 2 238 471 B1**

(12) **FASCICULE DE BREVET EUROPEEN**

(45) Date de publication et mention
de la délivrance du brevet:
**20.11.2013 Bulletin 2013/47**

(51) Int Cl.:
***G01S 17/89*** *(2006.01)*   ***G01S 17/10*** *(2006.01)*
***G01S 7/486*** *(2006.01)*

(21) Numéro de dépôt: **09705488.6**

(22) Date de dépôt: **30.01.2009**

(86) Numéro de dépôt international:
**PCT/FR2009/050145**

(87) Numéro de publication internationale:
**WO 2009/095629 (06.08.2009 Gazette 2009/32)**

(54) **DISPOSITIF POUR IMAGERIE ACTIVE 3D**

VORRICHTUNG FÜR 3D-AKTIVBILDGEBUNG

3D ACTIVE IMAGING DEVICE

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **01.02.2008 FR 0850652**

(43) Date de publication de la demande:
**13.10.2010 Bulletin 2010/41**

(73) Titulaire: **Commissariat à l'Énergie Atomique
et aux Énergies Alternatives
75015 Paris (FR)**

(72) Inventeurs:
• **GUELLEC, Fabrice
F-38760 Saint Paul de Varces (FR)**
• **TCHAGASPANIAN, Michaël
F-38330 Saint Ismier (FR)**

(74) Mandataire: **Vuillermoz, Bruno et al
Cabinet Laurent & Charras
"Le Contemporain"
50, Chemin de la Bruyère
69574 Dardilly Cédex (FR)**

(56) Documents cités:
FR-A1- 2 656 485          US-A1- 2002 036 765
US-A1- 2004 233 416       US-A1- 2006 007 422
US-B1- 6 522 395          US-B1- 6 661 500

EP 2 238 471 B1

**Description**

**DOMAINE DE L'INVENTION**

La présente invention concerne le domaine de l'imagerie active 3D, et plus particulièrement des dispositifs élémentaires de détection, ou pixels, des matrices entrant dans la constitution des détecteurs utilisés pour ce type d'imagerie.

**ETAT ANTERIEUR DE LA TECHNIQUE**

Les systèmes utilisés dans le domaine de l'imagerie active 3D, comme par exemple les systèmes « LADAR » (selon l'expression anglo-saxonne « _laser detection and ranging_ »), émettent un rayonnement électromagnétique de courte durée sous la forme d'une impulsion, à l'aide d'un laser par exemple, et utilisent un imageur sensible dans la bande spectrale d'émission pour détecter le flux réfléchi par des obstacles sur le chemin du rayonnement émis.

Ces systèmes combinent le flux réfléchi détecté à des informations temporelles, comme par exemple de séquencement ou de datation, et permettant ainsi de déterminer une information de distance. Cette information de distance est classiquement produite au moyen d'une conversion temps/distance en fonction du temps de propagation aller-retour de l'impulsion, dont la vitesse de propagation est connue, en utilisant la relation $d = c\,^t\!/_2$ , où

- ■ d est la distance,
- ■ c la vitesse de propagation de l'impulsion,
- ■ et t la durée mise par l'impulsion pour effectuer le voyage aller-retour.

Usuellement, pour obtenir l'image 3D d'une scène, les systèmes d'imagerie active 3D mettent en oeuvre une technique dite de « tranchage », telle que décrite par exemple dans le document de I. Baker, S. Duncan et J. Copley « A low noise, laser-gated imaging system for long range target identification », Proceedings of SPIE, vol. 5406, pages 133-144.

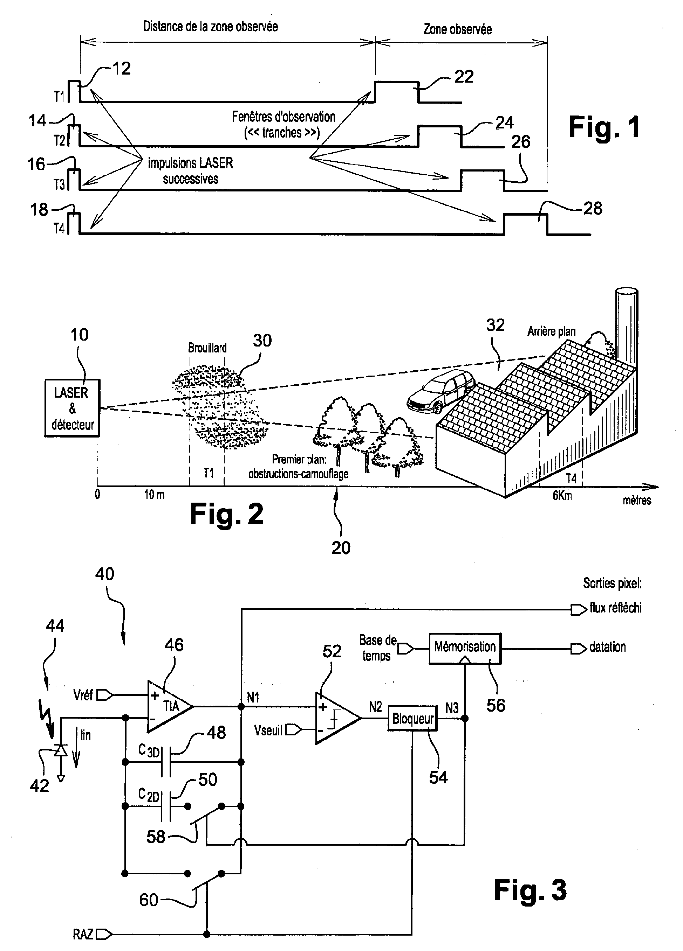

Le principe de cette technique est illustré au sein des figures 1 et 2. La partie émettrice d'un système **10** émet une série d'impulsions laser successives **12-18** en direction d'une scène à observer **20.** Après chaque impulsion **12-18,** la partie détectrice du système **10** capte le flux réfléchi par la scène **20** pendant une fenêtre temporelle **22-28** commandée par le système.

Le délai entre la génération d'une impulsion laser **12-18** et le début de la fenêtre temporelle **22-28** correspondante est réglé par le système en fonction de la distance d'observation de la scène **20,** alors que la durée de la fenêtre règle la profondeur d'observation.

Ainsi par exemple, la première fenêtre temporelle **22** est réglée pour observer la scène **20** à partir d'une distance de 5 kilomètres et sur une profondeur de 1 mètres, correspondant ici à une tranche T1 d'un nuage de brouillard **30,** alors que la dernière fenêtre temporelle **28** est réglée pour observer la scène **20** à une distance de 6 kilomètres sur une profondeur de 1 mètres, correspondant ici à une tranche T4 d'un bâtiment **32.**

Dans ce tel système d'imagerie 3D par tranchage, la résolution est limitée par la largeur des fenêtres temporelles **22-28.** Pour obtenir des résolutions élevées, un nombre important de paires d'impulsion/fenêtre doit être généré. Or, plus le nombre d'impulsions générées augmente, plus la durée nécessaire à la reconstitution de l'image 3D augmente, ce qui est incompatible avec certaines applications, notamment dans le domaine de l'imagerie 3D temps réel. En outre, multiplier le nombre d'impulsions nuit à la discrétion recherchée dans les systèmes furtifs.

D'autres systèmes d'imagerie 3D, communément désignés sous l'expression systèmes « 3D flash », n'utilisent qu'une unique impulsion laser. De tels systèmes sont par exemple décrits dans le document US-A-6 133 989. Dans ce type de système, il est nécessaire de mesurer l'intensité du flux réfléchi par la scène et de dater de manière indépendante, et cela pour chaque pixel constitutif du détecteur de flux, l'instant de retour de l'impulsion.

Plusieurs techniques de datation indépendante de l'instant de retour d'impulsion (plus connue sous l'expression « mesure du temps de vol ») ont été mises au point. Par exemple, une mesure du temps de vol est réalisée par filtrage dans chaque pixel en mesurant l'amplitude maximale du flux réfléchi détecté par celui-ci (voir par exemple le document de M. Browder et al. « 3D imaging laser radar », Proceedings of SPIE, vol. 4377, pages 73-83), ou bien par un échantillonnage multiple de l'impulsion (voir par exemple le document US-A-7 206 062).

Toutefois, la mesure de l'amplitude maximale par filtrage du flux réfléchi ne permet pas de réaliser la mesure classique du flux par intégration de courant. Les performances 2D d'un système d'imagerie mettant en oeuvre une telle technique est ainsi en retrait. En outre, un tel système est mal adapté à la réalisation d'une détection multimode capable de réaliser à la fois une imagerie 2D passive (c'est-à-dire sans émission de rayonnement), une imagerie 2D active (c'est-à-dire avec émission de rayonnement mais sans mesure de distance) et une imagerie 3D active.

Par ailleurs, la mesure du temps de vol par échantillonnage multiple est confrontée à des problèmes techniques de conception. En effet, il est difficile de mémoriser un nombre important d'échantillons dans la surface d'un seul pixel. En outre, la fréquence d'échantillonnage dépend fortement de la technologie utilisée pour réaliser les circuits.

Enfin, la mise en oeuvre de cette technique induit une consommation d'énergie importante, incompatible avec certaines applications, notamment les systèmes d'imagerie portables. Par conséquent, on observe usuellement que les systèmes mettant en oeuvre cette technique présentent une résolution temporelle limitée de la mesure du temps de vol.

Il est également connu, par exemple du document US-A-2006/007422, un système d'imagerie 3D, tel que représenté en figure 5 de ce document, dans lequel la charge produite par un détecteur est tout d'abord amplifiée (bloc 152). La sortie de l'amplificateur 152 est reliée d'une part à un intégrateur (bloc 164) qui intègre le signal amplifié et d'autre part à un comparateur (bloc 154) qui compare le signal amplifié à une valeur seuil pour déterminer l'instant d'arrivée d'une impulsion sur le détecteur. La mesure de charge et la mesure du temps de vol sont ainsi réalisées de manière parallèle, l'intégrateur et le comparateur étant en parallèle,. Ce circuit présente plusieurs inconvénients, tels que la nécessité d'un grand nombre de composants et la nécessité de disposer d'un amplificateur 152 qui soit suffisamment linéaire sur toute la plage de signaux d'entrée. En pratique, au moins trois amplificateurs opérationnels sont nécessaires pour réaliser respectivement l'amplificateur d'entrée, le comparateur et l'intégrateur. La réalisation d'amplificateurs opérationnels nécessitant généralement une place importante de silicium, un tel circuit est généralement trop encombrant pour pouvoir être utilisé dans les architectures matricielles modernes. De plus, un tel circuit présente généralement une consommation importante et génère du bruit additionnel qui nuit à la qualité de la mesure.

Il est également connu du document US-B-6 522 395 un système d'imagerie active 3D qui mesure le temps de vol selon le préambule de la revendication 1. Selon ce document, le temps de vol est mesuré en intégrant des charges produites par une photodiode sous l'effet d'une impulsion correspondant à la réflexion d'une impulsion émise par le système, en détectant un instant de dépassement d'une valeur de seuil par cette tension, puis en calculant le temps de vol en retranchant de l'instant détecté le rapport entre la valeur maximale atteinte par la tension intégrée et la largeur de l'impulsion émise.

On connait également du document FR-A-2 656 485 un intégrateur de charges produites par une photodiode, dont le temps d'intégration est commutable, connecté à un amplificateur à gain variable. Dans ce document, le gain de l'amplificateur est modifié pour compenser les sauts de tension en sortie de l'intégrateur résultant de la modification du temps d'intégration de celui-ci.

## EXPOSE DE L'INVENTION

Le but de la présente invention est de résoudre les problèmes susmentionnés en proposant un dispositif destiné à l'imagerie 3D active, autorisant une mesure simultanée du flux réfléchi et du temps de vol, tout en permettant une utilisation multimode et n'induisant pas un surcoût de consommation dommageable.

A cet effet, l'invention a pour objet un dispositif conforme à la revendication 1.

Selon l'invention, l'intégrateur est à gain d'amplification variable, le gain d'amplification de l'intégrateur avant l'instant de dépassement de la tension de seuil étant supérieur au gain d'amplification après l'instant de dépassement de ladite tension.

En d'autres termes, la mesure du flux réfléchi est réalisée classiquement à l'aide par exemple d'une photodiode ou d'un phototransistor couplé à un intégrateur. Le comparateur en bout d'intégrateur permet quant à lui de détecter une augmentation de la tension délivrée par l'intégrateur, cette augmentation signifiant un rayonnement incident sur l'élément photosensible. Le temps de dépassement de la valeur de seuil du comparateur permet ainsi de déterminer le temps de vol.

En outre, l'intégrateur et le comparateur sont agencés en série. L'intégrateur constitue l'étage d'entrée du dispositif, juste après l'élément photosensible, et réalise une conversion courant-tension (le signal délivré par l'intégrateur est une tension) qui est nécessaire pour le comparateur. En d'autres termes, il n'est pas nécessaire de prévoir un circuit de conversion courant-tension, tel qu'un amplificateur dédié, entre l'élément photosensible et le comparateur. On économise ainsi en pratique la réalisation d'un amplificateur opérationnel par rapport au dispositif décrit dans le document US-A-2006/007422.

On notera également qu'il n'est pas nécessaire de prévoir une amplification linéaire des charges produites par l'élément photosensible, ce qui simplifie la conception du circuit. En effet, la réalisation d'une amplification linéaire est usuellement difficile et nécessite beaucoup de surface de silicium et de puissance. En outre, la réalisation de la fonction de conversion courant-tension par le biais de l'intégrateur permet de s'affranchir des problèmes de bande passante et de sensibilité au bruit d'un convertisseur tel qu'un amplificateur.

Par ailleurs, l'utilisation d'un intégrateur classique permet un usage multimode, puisque le comparateur ne perturbe pas le fonctionnement global de la mesure de flux. En outre, les composants dédiés à la mesure du temps de vol sont des composants simples (comparateur et mémoire) qui ne consomment pas beaucoup d'énergie.

Enfin, dans une première phase, la charge en entrée de l'intégrateur est convertie en tension avec un gain d'amplification important. De fait, la tension en sortie de l'intégrateur atteint rapidement la tension de seuil, permettant ainsi une détection précise du temps de vol. Une fois la tension de seuil atteinte, le gain de l'intégrateur est diminué de manière à intégrer l'ensemble des charges produites par l'élément photosensible.

Plus particulièrement, l'intégrateur comporte un amplificateur opérationnel monté en contre-réaction par un premier condensateur et un second condensateur commutable, le premier condensateur ayant une capacité inférieure à celle du second condensateur, et le second condensateur étant apte à être connecté en parallèle au premier condensateur consécutivement à l'instant de dépassement de la tension de seuil.

La capacité du premier condensateur est sélectionnée en fonction de la précision souhaitée sur l'instant de dépassement de la tension de seuil.

Ainsi, dans le cas d'un intégrateur formé d'un amplificateur contre-réactionné par un jeu de condensateurs, l'amplificateur est contre-réactionné par une capacité de plus faible valeur dans une première phase (la tension en sortie de l'intégrateur aux bornes du jeu de condensateurs augmentant d'autant plus vite que la capacité globale de ce jeu de condensateur est faible). La constante de temps de l'intégrateur est donc faible de sorte que la valeur de seuil en sortie de celui-ci est rapidement atteinte. La mesure du temps de vol est donc plus précise.

Par ailleurs, une fois cette mesure établie, une capacité de plus grande valeur est contre-réactionnée à l'amplificateur. Cette capacité est dimensionnée de manière à permettre l'intégration de la totalité des charges produites par le rayonnement incident sur l'élément photosensible. On notera que les charges intégrées par le premier condensateur ne sont pas perdues, mais transférées sur la capacité finale des condensateurs montés en parallèle.

Selon un mode de réalisation particulier de l'invention, le dispositif comporte un module d'estimation d'un délai de détection, correspondant l'instant de début du rayonnement sur l'élément photosensible et l'instant de dépassement, en fonction de la tension délivrée par l'intégrateur et un module de correction de l'instant de dépassement en soustrayant de celui-ci le délai de détection déterminé. Plus particulièrement, le module d'estimation du délai de détection est apte à estimer celui-ci selon la relation :

$$T_{\text{det}} = \frac{\alpha}{a.\Delta V_{\text{int}} + b} + \beta$$

où $\Delta V_{\text{int}}$ est une variation de la tension correspondant au rayonnement incident sur l'élément photosensible, et a, b, $\alpha$, et $\beta$ sont des paramètres prédéterminés.

En d'autres termes, il existe une latence de détection du temps de vol. En effet, entre le début du flux incident sur l'élément photosensible, qui est le temps de vol réel, et la mesure de celui-ci par le dépassement de la valeur de seuil du comparateur, il existe un certain délai.

Il est possible d'estimer cette latence en fonction des caractéristiques de l'intégrateur et de la tension délivrée par celui-ci. Une correction de la mesure du temps de vol peut ainsi être réalisée pour augmenter la précision temporelle du dispositif.

Selon un mode de réalisation particulier de l'invention, la tension de seuil du comparateur est réglée sur une tension sensiblement égale à :

$$V_{\text{comp}} + V_{offset}^{CTIA} + V_{offset}^{comparateur}$$

où $V_{\text{comp}}$ est une tension prédéterminée, $V_{offset}^{CTIA}$ est une tension d'offset de l'intégrateur, et $V_{offset}^{comparateur}$ est une tension d'offset du comparateur.

En d'autres termes, l'intégrateur et le comparateur ne sont pas parfaits. Notamment les tensions qu'ils délivrent sont entachées d'offset qui sont des sources d'imprécision sur la mesure du temps de vol. En incorporant la valeur de ces offsets dans la tension de seuil du comparateur, leurs effets sur la mesure du temps de vol sont ainsi éliminés.

Plus particulièrement, le dispositif comprend :

■ un premier interrupteur apte à connecter la sortie du comparateur avec l'entrée de tension de seuil de celui-ci,
■ un troisième condensateur connecté entre l'entrée de tension de seuil du comparateur et la première borne d'un deuxième et troisième interrupteurs, la seconde borne du troisième condensateur étant connectée respectivement à la masse et à une tension prédéterminée,

la tension de seuil du comparateur étant réglée en fermant le premier et le second interrupteurs et en ouvrant le troisième interrupteur, puis en ouvrant le premier et le second interrupteurs et en fermant le troisième interrupteur.

En d'autres termes, grâce à une procédure simple d'initialisation du dispositif, on obtient les offsets réels de l'intégrateur et du comparateur dans la tension de seuil. Ainsi, on s'affranchit de toute procédure de calibration en usine tout en s'assurant d'une compensation des vrais offsets.

L'invention a également pour objet une matrice d'imagerie comportant une pluralité de dispositifs du type précité.

L'invention a également pour objet un système d'imagerie active 3D comportant une source pilotable de rayonnement et une matrice de détection apte à détecter un rayonnement issu de ladite source et réfléchi par des obstacles. Selon l'invention, la matrice de détection comporte une pluralité de dispositifs du type précité.

## BREVE DESCRIPTION DES FIGURES

La présente invention sera mieux comprise à la lecture de la description qui suit, donnée uniquement à titre d'exemple, et réalisée en relation avec les dessins annexés, dans lesquels des références identiques désignent des éléments identiques ou analogues et dans lesquels :

- les figures 1 et 2 illustrent une imagerie active 3D par tranchage discutée dans le préambule ;
- la figure 3 est une vue schématique d'un premier mode de réalisation du pixel selon l'invention ;
- les figures 4 à 6 sont des chronogrammes de signaux internes au pixel conforme à l'invention lors d'une trame de lecture ;
- la figure 7 est une vue schématique d'un deuxième mode de réalisation du pixel selon l'invention ; et
- la figure 8 est une vue schématique d'un troisième mode de réalisation du pixel selon l'invention.

## MODES DE REALISATION DE L'INVENTION

Sur la figure 3, un dispositif, ou pixel, **40** selon l'invention comporte une photodiode **42** apte à recevoir un rayonnement incident **44** et à produire, en fonction de celui-ci, un courant « $I_{in}$ ».

L'anode de la photodiode **42** est connectée à la masse et sa cathode à la borne inverseuse (-) d'un amplificateur opérationnel **46,** lequel forme un intégrateur avec deux condensateurs **48, 50** contre-réactionnés entre la sortie de l'amplificateur **46** et la borne inverseuse (-) de celui-ci.

L'amplificateur **46** reçoit par ailleurs sur sa borne non-inverseuse (+) une tension constante $V_{ref}$ et délivre en sortie une tension $V_{int}$ proportionnelle à la charge électrique produite par la photodiode **42** en raison du rayonnement **44** incident sur celle-ci.

Le pixel **40** comporte également un comparateur **52,** dont la borne positive (+) est connectée à la sortie $V_{int}$ de l'amplificateur **48,** et dont la borne négative (-) reçoit une tension de seuil constante prédéterminée $V_{seuil}$. Le comparateur **52** délivre ainsi la différence de tension existant entre sa borne positive (+) et sa borne négative (-).

Un bloqueur **54** est en outre prévu en sortie du comparateur **52**. La sortie du bloqueur **54** bascule d'une première tension à une seconde tension, supérieure à la première tension à l'instant de dépassement de la tension de seuil $V_{seuil}$ par la tension $V_{int}$ délivrée par l'amplificateur **46**. Une fois ce basculement effectué, la sortie du bloqueur **54** reste verrouillée sur la seconde tension jusqu'à une initialisation ultérieure.

Un bloc de mémorisation **56** est connecté à la sortie du bloqueur **54** et mémorise l'instant de basculement de la sortie du bloqueur **54** en fonction d'une base de temps reçue d'une horloge (non représentée).

Par ailleurs, un premier interrupteur **58** est prévu en série avec le deuxième condensateur **58**. L'interrupteur **58** est piloté par la sortie du bloqueur **54,** et se ferme lorsque la sortie de celui-ci bascule de la première tension à la seconde tension, c'est-à-dire à l'instant du dépassement de la tension de seuil $V_{seuil}$ par la tension $V_{int}$ délivrée par l'amplificateur **46**. Le deuxième condensateur **50** est ainsi connecté en parallèle au premier condensateur **48**.

De manière avantageuse, le premier condensateur **48** présente une capacité $C_{3D}$ faible. Par le terme « faible », on entend ici des valeurs de capacité qui autorisent une précision temporelle souhaitée sur le temps de vol et le niveau de courant minimal en entrée de l'intégrateur que le système doit pouvoir traiter.

Le courant produit par la photodiode **42** est ainsi intégré avec un fort gain, de sorte que la sortie $V_{int}$ de l'amplificateur **46** dépasse très rapidement la tension de seuil $V_{seuil}$ lorsqu'un rayonnement est incident sur la photodiode. Une fois ce dépassement effectué, c'est-à-dire une fois daté le temps de vol, la connexion du second condensateur est réalisée, la capacité $C_{2D}$ de celui-ci étant dimensionnée pour permettre l'intégration de la totalité du flux incident.

Enfin, le pixel comprend un deuxième interrupteur de remise à zéro **60,** connecté en parallèle des premier et deuxième condensateurs **48** et **50,** et est piloté par un signal RAZ de remise à zéro. Le signal RAZ pilote également l'initialisation du bloqueur **54**. Lors d'une phase d'initialisation, les premier et second interrupteurs **58, 60** sont fermés, déchargeant ainsi les premier et deuxième condensateurs **48, 50,** et la sortie du bloqueur **54** est basculée sur la première tension.

Ainsi, la sortie de l'amplificateur **46** fournit la mesure du rayonnement incident sur la photodiode **42,** et la sortie du bloc de mémorisation **56** fournit une datation $TOF_{mesuré}$ du début du rayonnement incident sur la photodiode **42**.

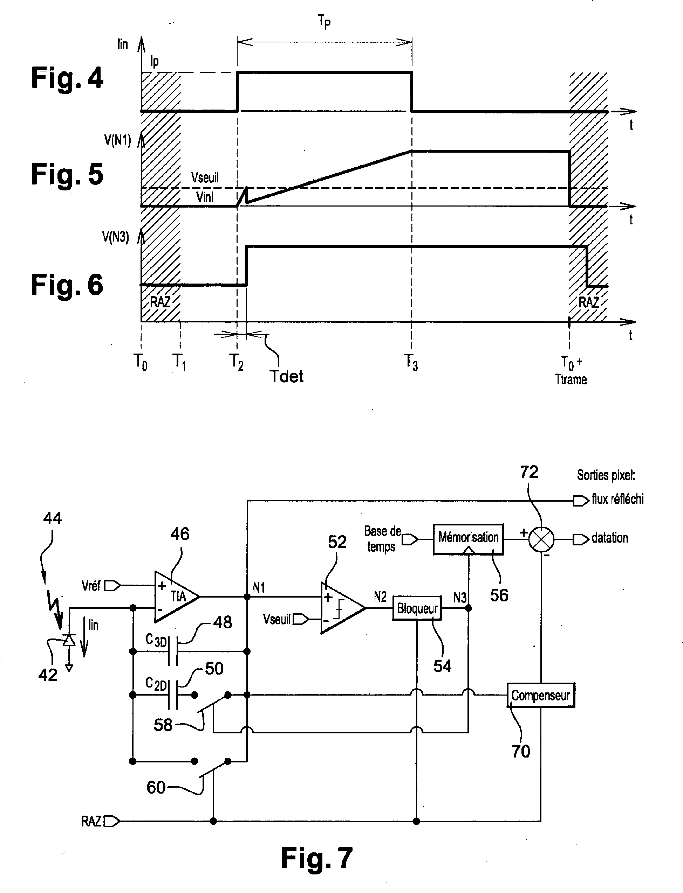

Les figures 4 à 6 illustrent un exemple, en fonction du temps, des signaux internes au pixel **40**. Ces figures illustrent par exemple une fenêtre temporelle **22-28** telle que décrite en relation avec les figures 1 et 2, et pendant laquelle un flux réfléchi par la scène est incident sur la photodiode **42**.

Pour des raisons de clarté, il est ici supposé que le rayonnement incident sur la photodiode **42** se présente sous la forme d'un créneau. La photodiode **42** produit ainsi un créneau d'amplitude $I_p$ et de durée $T_p$, tel qu'illustré à la figure 4. On notera que la durée $T_p$ du créneau est celle des impulsions laser émises.

La fenêtre temporelle comprend un intervalle d'initialisation entre $T_0$ et $T_1$ au cours duquel les condensateurs **48, 50** sont déchargés, et la sortie du bloqueur **54,** représentée à la figure 6, est réglée sur la première tension.

La photodiode **42** débute sa production de courant sous l'effet du rayonnement incident à l'instant $T_2$, l'instant $T_2$ étant le temps de vol réel $TOF_{réel}$ du flux réfléchi par la scène.

A cet instant $T_2$, l'intégration du courant $I_{in}$ débute. La tension $V_{int}$ en sortie de l'amplificateur **46,** illustrée à la figure 5, augmente alors rapidement en raison de la faible valeur de la capacité $C_{3D}$ du condensateur **48**.

La tension $V_{int}$ en sortie de l'amplificateur **46** atteint la tension de seuil $V_{seuil}$ du comparateur **52** à l'instant $T_2 + T_{det}$, instant auquel la sortie du bloqueur **54** bascule sur la seconde tension, datant ainsi le temps de vol.

Au même instant, l'interrupteur **58** est fermé, connectant ainsi le second condensateur **50** en parallèle du premier condensateur **48**. La charge initialement stockée dans ce dernier est alors transférée sur la capacité totale formée par les deux condensateurs **48, 50** en parallèle, et l'intégration du courant se poursuit à un rythme plus lent.

La tension en sortie de l'amplificateur **46** en fin de fenêtre temporelle fournit ainsi une mesure de la charge totale produite par la photodiode.

De même, l'instant $T_2+T_{det}$ fournit une datation mesurée du temps de vol.

On notera que la datation du temps de vol s'accompagne d'une imprécision, à savoir le délai $T_{det}$.

En considérant l'intégrateur initial (formé de l'amplificateur **46** et du premier condensateur **48**) comme idéal, le délai de détection $T_{det}$ dépend de l'écart entre la tension de seuil de comparateur $V_{seuil}$, de la valeur initiale $V_{ini}$ que prend la tension $V_{int}$ de sortie de l'amplificateur avant l'intégration du courant, de la capacité $C_{3D}$ du premier condensateur **48** et de l'amplitude Ip de courant généré par la photodiode **47** selon la relation :

$$T_{\text{det}} = \frac{C_{3D} \times (V_{seuil} - V_{ini})}{I_p} \qquad (1)$$

De manière avantageuse, la capacité $C_{3D}$ et la tension de seuil $V_{seuil}$ sont ajustées pour minimiser le délai de détection $T_{det}$. Ainsi la capacité $C_{3D}$ est choisie pour être la plus petite possible, et la tension de seuil $V_{seuil}$ est réglée pour être la plus proche possible de la tension initiale $V_{ini}$.

Cependant, la minimisation du délai de détection $T_{det}$ est limitée par la faisabilité d'un intégrateur utilisant une capacité de faible valeur ainsi que la marge de bruit du comparateur **52**.

De fait, pour un fonctionnement satisfaisant du pixel décrit ci-dessus, il existe toujours un délai $T_{det}$ qui limite la précision de datation du temps de vol, ce qui peut être gênant dans certaines applications.

La figure 7 est une vue schématique d'un deuxième mode de réalisation du pixel selon l'invention. Ce deuxième mode de réalisation diffère du premier mode de réalisation décrit en relation avec la figure 3 en ce qu'il comporte en outre un module **70** de correction de la datation mémorisée dans le bloc de mémorisation **56**. Ce module **70** de correction est par exemple mis en oeuvre de manière logicielle par un processeur ou est réalisé dans le circuit intégré réalisant la lecture de la photodiode **42**.

Le module **70** de correction est connecté à la sortie de l'amplificateur **46** pour une mesure de la tension $V_{int}$ sur celle-ci. Le module **70** estime en fonction de celle-ci le délai de détection $T_{det}$ selon la relation :

$$T_{\text{det}} = \frac{\alpha}{a.\Delta V_{\text{int}} + b} + \beta \qquad (2)$$

où $\Delta V_{int}$ est une variation de la tension $V_{int}$ en sortie de l'amplificateur 46 entre la fin et le début de la fenêtre temporelle,

et a, b, $\alpha$, et $\beta$ sont des paramètres prédéterminés.

Un soustracteur **72** est par ailleurs prévu en sortie du bloc de mémorisation **56** pour retrancher le délai de détection estimé par le bloc **70** de la valeur mémorisée dans le bloc **56**.

En effet, comme cela a été décrit précédemment, le temps de vol mesuré, à savoir celui mémorisé dans le bloc de mémorisation **56,** s'écrit :

$$TOF_{mesuré} = TOF_{réel} + T_{\det} \quad (3)$$

En faisant l'approximation selon laquelle que le flux incident sur la photodiode **42** prend la forme d'un créneau, le délai de détection s'écrit selon la relation (1), ou plus généralement sous la forme :

$$T_{\det} = \alpha . I_p + \beta \quad (4)$$

Par ailleurs, on montre que l'amplitude Ip du créneau de courant produit par la photodiode **42** peut s'écrire en fonction de la tension de sortie $V_{int}$ de l'amplificateur **46** sous la forme :

$$I_p = \frac{(C_{3D} + C_{2D}).(V_{int}(TOF_{réel} + T_p) - V_{int}(TOF_{réel}))}{T_p} \quad (5)$$

Or, la différence de tension $V_{int}(TOF_{réel}+T_P)$-$V_{int}(TOF_{réel})$, prise entre l'instant de fin $TOF_{réel} + T_{\det}$ et l'instant de début $TOF_{réel}$ du créneau de courant, est connue et égale à la différence de tension en sortie de l'amplificateur **46** entre le début et la fin de la fenêtre temporelle.

On peut ainsi écrire l'amplitude Ip sous la forme :

$$I_p = a(V_{int}(TOF_{réel} + T_p) - V_{int}(TOF_{réel})) + b = a.\Delta V_{ini} + b \quad (6)$$

En combinant les relations (4) et (6), la relation (2) est obtenue.

Les paramètres a et b de la relation (6) sont déterminés pour le pixel lors d'une phase antérieure de calibration en utilisant deux sources de rayonnement uniforme comme référence ayant une largeur d'impulsion $T_P$ fixée, cette largeur d'impulsion étant également celle utilisée ultérieurement lors du fonctionnement du système d'imagerie 3D.

Les paramètres $\alpha$ et $\beta$ sont également déterminés lors de la phase de calibration consécutivement à la détermination des paramètres a et b.

Pour cela, deux impulsions d'amplitude différente sont émises et réfléchies par un même obstacle à une distance d connue du pixel, afin d'éclairer uniformément celui-ci. Le temps de vol est ainsi mesuré et donc connu.

Pour chaque impulsion, la différence de tension $\Delta V_{int}$, correspondant au flux réfléchi mesuré par le pixel, est mesurée. Connaissant le temps de vol réel ainsi que l'amplitude de l'impulsion par la relation (6), les paramètres $\alpha$ et $\beta$ sont calculés.

En variante, la correction de la mesure du temps de vol est réalisé, sans présumer d'une relation entre le flux incident et le délai de détection $T_{\det}$, en utilisant une table de correction prédéterminée, et la mesure du flux réalisé par le pixel, c'est-à-dire $\Delta V_{int}$.

Dans les modes de réalisation venant d'être décrits, la datation du temps de vol est réalisée par le comparateur **52** en fonction de la tension délivrée par l'amplificateur **46**.

Or, ces éléments ne sont pas idéaux et génèrent notamment des offsets qui nuisent à la précision de la dation du temps de vol. Plus particulièrement, les tensions de sortie de l'amplificateur **46** et du comparateur **52** sont entachées respectivement des offsets $V_{offset}^{CTIA}$ et $V_{offset}^{comparateur}$ .

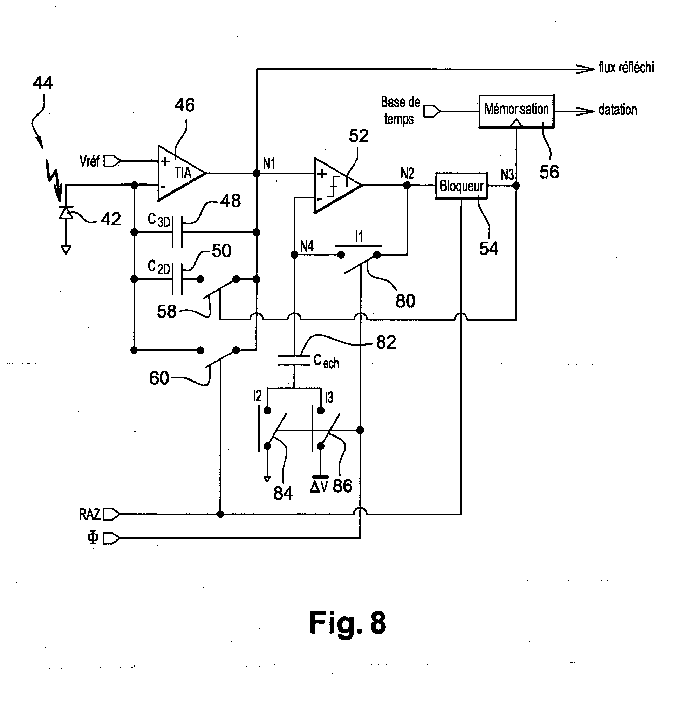

Le troisième mode de réalisation illustré à la figure 8 compense de tels offsets.

Ce troisième mode de réalisation diffère du premier mode de réalisation décrit en relation avec la figure 3 en ce qu'il comporte :

- un troisième interrupteur **80** monté entre la sortie du comparateur **52** et la borne négative (-) de celui-ci utilisée pour la tension de seuil,
- un troisième condensateur **82** connecté par l'une de ses bornes à l'entrée négative (-) dudit comparateur **52,**
- un quatrième interrupteur **84** monté entre l'autre borne du condensateur **82** et la masse,
- et un cinquième interrupteur **86** monté entre l'autre borne du condensateur **82** et des moyens aptes à produire une variation de potentiel ΔV de chacune des bornes du condensateur Cech lors de la fermeture de l'interrupteur **86** (avec ouverture de l'interrupteur **84**).

Les troisième, quatrième et cinquième interrupteurs **80, 84, 86** sont par ailleurs pilotés par un signal φ selon une stratégie de compensation d'offsets.

Consécutivement à la phase de remise à zéro, une première phase de la compensation des offsets consiste à fermer les troisième et quatrième interrupteurs **80, 84** et à ouvrir le cinquième interrupteur **86**. Il s'établit alors, sur la borne négative (-) du comparateur **52,** une tension $V_{\phi1}$ selon la relation :

$$V_{\phi1} = V_{ref} + V_{offset}^{CTIA} + V_{offset}^{comparateur} \qquad (7)$$

Ensuite, lors d'une seconde phase de la compensation des offsets, les troisième et quatrième interrupteurs **80, 84** sont ouverts, et le cinquième interrupteur **86** est fermé. Il s'établit alors, sur la borne négative (-) du comparateur **52,** une tension $V_{\phi2}$ selon la relation :

$$V_{\phi2} = V_{ref} + V_{offset}^{CTIA} + V_{offset}^{comparateur} + \Delta V \quad (8)$$

Les interrupteurs **80, 84, 86** restent alors dans cet état pour la mesure du flux incident et du temps de vol. La tension $V_{\phi2}$ sert alors de tension de seuil $V_{seuil}$, tel que décrit précédemment.

Comme on peut le constater, la valeur des offsets $V_{offset}^{CTIA}$ et $V_{offset}^{comparateur}$ étant comprise dans la tension de seuil $V_{seuil}$, cette valeur compense l'apparition des offsets $V_{offset}^{CTIA}$ et $V_{offset}^{comparateur}$ en sortie du comparateur **52**. La tension de l'amplificateur **46,** induite directement par l'intégration du courant produit par la photodiode **42,** est alors comparée à la tension $V_{ref} + \Delta V$.

Cette compensation d'offsets apporte ainsi, non seulement une précision accrue sur la mesure du temps de vol grâce à un délai de détection minimisé, mais également une robustesse vis-à-vis des dispersions technologiques présentes entre pixels. En effet, la compensation mise en oeuvre compense les offsets réels présents dans le pixel.

Cette compensation permet également de minimiser l'écart entre la tension de seuil $V_{seuil}$ et la tension initiale à l'entrée positive du comparateur **52** connectée à l'amplificateur **46** par un choix approprié de la tension ΔV, par exemple en réglant la valeur de la tension ΔV le plus proche possible de la valeur nulle. On notera en effet que la tension $V_{ini}$ est égale à $V_{ref} + V_{offset}^{CTIA}$ et que le comparateur **52** bascule lorsque la différence de tension entre ses bornes est positive. Par conséquent, en gardant la tension $V_{\phi1}$ à la borne inverseuse (-) du comparateur **52,** il existe un risque de déclenchement intempestif de celui-ci. La tension positive ΔV évite ainsi un tel risque tout en minimisant le délai de déclenchement.

On notera qu'en pratique, la tension Vini considérée lors de la phase de compensation inclut en plus de l'offset de l'amplificateur, les effets d'injection de charges des interrupteurs **58, 60.** Ainsi, la tension de seuil est égale à $V_{comp} + V_{offset}^{CTIA} + V_{offset}^{comparateur}$, avec $V_{comp} + V_{offset}^{CTIA}$ égal à Vini à l'instant T1 précédant le démarrage de la phase d'intégration.

Enfm, bien que la phase de compensation ait été décrite comme consécutive à la phase de remise à zéro, elle peut au contraire être combinée à celle-ci.

Un quatrième mode de réalisation du pixel selon l'invention comprend à la fois la compensation du délai de détection, telle que décrite en relation avec la figure 7, et la compensation des offsets, telle que décrite en relation avec la figure 8.

Le pixel selon l'invention est particulièrement adapté à une imagerie multimode. En effet, la mesure du flux et de la datation sont réalisées simultanément, notamment sans que la mesure de datation n'influe sur la mesure de flux.

Pour obtenir une imagerie 2D ou 3D passive, il suffit simplement de désactiver la portion de circuit située en aval de l'intégrateur ou de ne pas tenir compte de la valeur de datation renvoyée par celle-ci.

Il a été décrit un intégrateur formé d'un amplificateur opérationnel contre-réactionné par des capacités commutables, de manière à obtenir une conversion courant-tension avec une amplification à gain variable. On comprendra que tout type d'intégrateur à gain variable présentant un gain d'amplification avant la détection du dépassement de la tension de seuil du comparateur supérieur au gain après ledit dépassement convient. Toutefois, l'intégrateur formé de l'amplificateur opérationnel contre-réactionné par les capacités commutables est préféré en raison de sa simplicité de conception et de pilotage.

## Revendications

**1.** Dispositif comprenant un élément photosensible (42) produisant une charge électrique en fonction du rayonnement (44) incident sur celui-ci, et des moyens de mesure et de datation d'un flux de rayonnement incident reçu par l'élément photosensible comprenant un intégrateur de charge (46, 48, 50) connecté à l'élément photosensible (42) et convertissant la charge en tension, un comparateur (52) apte à comparer la tension délivrée par l'intégrateur (46, 48, 50) à une tension de seuil, et un bloc de mémorisation (56) de l'instant de dépassement de la tension de seuil par la tension délivrée par l'intégrateur, *caractérisé :*

■ en ce que l'intégrateur est à gain d'amplification variable et comprend des moyens pour appliquer, lors d'une fenêtre temporelle d'intégration par l'intégrateur des charges produites par l'élément photosensible sous l'effet du flux incident:

- un premier gain d'amplification de l'intégrateur lors de l'arrivée du flux incident et jusqu'à l'instant de dépassement de la tension de seuil ; et
- un second gain d'amplification inférieur au premier gain d'amplification après l'instant de dépassement de ladite tension de seuil pour permettre l'intégration de la totalité du flux incident ;

■ et en ce que ledit instant de dépassement mémorisé constitue une datation du début du rayonnement incident sur l'élément photosensible.

**2.** Dispositif selon la revendication 1, *caractérisé :*

- **en ce que** l'intégrateur (46, 48, 50) comporte un amplificateur opérationnel (46) contre-réactionné par un premier condensateur (48) et un second condensateur commutable (50), le premier condensateur (48) ayant une capacité inférieure à celle du second condensateur (50),
- et **en ce que** le second condensateur (50) est apte à être connecté en parallèle du premier condensateur (48) consécutivement à l'instant de dépassement de la tension de seuil.

**3.** Dispositif selon la revendication 2, *caractérisé* **en ce que** la capacité du premier condensateur (48) est sélectionnée en fonction de la précision souhaitée sur l'instant de dépassement de la tension de seuil.

**4.** Dispositif selon l'une quelconque des revendications précédentes, *caractérisé* **en ce qu'**il comporte :

- un module (70) d'estimation d'un délai de détection, correspondant à l'instant de début du rayonnement sur l'élément photosensible et l'instant de dépassement de la tension de seuil, en fonction de la tension délivrée par l'intégrateur (46, 48, 50),
- et un module (72) de correction de l'instant de dépassement en soustrayant de celui-ci le délai de détection déterminé.

**5.** Dispositif selon la revendication 4, *caractérisé* **en ce que** le module (70) d'estimation du délai de détection est apte à estimer celui-ci selon la relation :

$$T_{\text{det}} = \frac{\alpha}{a.\Delta V_{\text{int}} + b} + \beta$$

où $\Delta V_{int}$ est une variation de la tension correspondant au rayonnement incident sur l'élément photosensible, et a, b, $\alpha$, et $\beta$ sont des paramètres prédéterminés.

6. Dispositif selon l'une quelconque des revendications précédentes, *caractérisé* **en ce que** la tension de seuil du comparateur (52) est réglée sur une tension sensiblement égale à $V_{comp} + V_{offset}^{CTIA} + \overline{V}_{offset}^{comparateur}$ , où:

   - $V_{comp}$ est une tension prédéterminée,

   - $V_{offset}^{CTIA}$ est une tension d'offset de l'intégrateur,

   - et $V_{offset}^{comparateur}$ est une tension d'offset du comparateur.

7. Dispositif selon la revendication 6, *caractérisé*

   - **en ce qu'**il comporte :

      ■ un premier interrupteur (80) apte à connecter la sortie du comparateur (52) avec l'entrée de tension de seuil de celui-ci,
      ■ un troisième condensateur (82) connecté entre l'entrée de tension de seuil du comparateur et la première borne d'un deuxième et troisième interrupteurs (84, 86), la seconde borne du troisième condensateur (82) étant connectée respectivement à la masse et à des moyens aptes à produire une variation de potentiel ($\Delta V$) de chacune des bornes du troisième condensateur (82) lors de la fermeture du troisième interrupteur (86),

   - et **en ce que** la tension de seuil de comparateur est réglée en fermant le premier et le second interrupteurs (80, 84) et en ouvrant le troisième interrupteur (86), puis en ouvrant le premier et le second interrupteurs (80, 84) et en fermant le troisième interrupteur (86).

8. Matrice d'imagerie comportant une pluralité de dispositifs selon l'une quelconque des revendications précédentes.

9. Système d'imagerie active 3D comportant une source pilotable de rayonnement et une matrice de détection apte à détecter un rayonnement issu de ladite source et réfléchi par des obstacles, *caractérisé* **en ce que** la matrice de détection comporte une pluralité de dispositifs selon l'une quelconque des revendications 1 à 7.

**Patentansprüche**

1. Vorrichtung mit einem lichtempfindlichen Element (42), das eine elektrische Ladung in Abhängigkeit von der Strahlung (44) erzeugt, die auf dieses einfällt, und Mess- und Datierungseinrichtungen für einen vom lichtempfindlichen Element empfangenen einfallenden Strahlungsfluss, mit einem Strahlungsintegrator (46, 48, 50), der an das lichtempfindliche Element (42) angeschlossen ist und die Ladung in Spannung umsetzt, einem Komparator (52), der in der Lage ist, die vom Integrator (46, 48, 50) gelieferte Spannung mit einer Schwellenspannung zu vergleichen, und einem Speicherblock (56) für den Zeitpunkt der Überschreitung der Schwellenspannung durch die vom Integrator gelieferte Spannung, **dadurch gekennzeichnet:**

   ■ dass der Integrator von variablem Verstärkungsgrad ist und Einrichtungen umfasst, um während eines Integrationszeitfensters durch den Integrator Ladungen anzuwenden, die vom lichtempfindlichen Element unter der Einwirkung des einfallenden Flusses erzeugt wurden:

      - einen ersten Verstärkungsgrad des Integrators beim Eintreffen des einfallenden Flusses und bis zum Zeitpunkt der Überschreitung der Schwellenspannung; und
      - einen zweiten Verstärkungsgrad, der geringer ist als der erste Verstärkungsgrad, nach dem Zeitpunkt der Überschreitung der Schwellenspannung, um die Integration des gesamten einfallenden Flusses zuzulassen;

■ und dass der gespeicherte Zeitpunkt der Überschreitung eine Datierung des Beginns der auf das lichtempfindliche Element einfallenden Strahlung ist.

2. Vorrichtung nach Anspruch 1, **dadurch gekennzeichnet:**

- **dass** der Integrator (46, 48, 50) einen durch einen ersten Kondensator (48) und einen zweiten, schaltbaren Kondensator (50) gegengekoppelten Operationsverstärker (46) umfasst, wobei der erste Kondensator (48) eine geringere Kapazität hat als der zweite Kondensator (50),
- und **dass** der zweite Kondensator (50) geeignet ist, infolge des Zeitpunkts der Überschreitung der Schwellenspannung mit dem ersten Kondensator (48) parallelgeschaltet zu werden.

3. Vorrichtung nach Anspruch 2, **dadurch gekennzeichnet, dass** die Kapazität des ersten Kondensators (48) in Abhängigkeit von der gewünschten Genauigkeit über den Zeitpunkt der Überschreitung der Schwellenspannung ausgewählt ist.

4. Vorrichtung nach einem der vorhergehenden Ansprüche, **dadurch gekennzeichnet, dass** sie umfasst:

- ein Schätzungsmodul (70) für eine Erfassungsverzögerung, die dem Beginnzeitpunkt der Strahlung auf das lichtempfindliche Element und dem Zeitpunkt der Überschreitung der Schwellenspannung in Abhängigkeit von der durch den Integrator (46, 48, 50) gelieferten Spannung entspricht,
- und ein Korrekturmodul (72) für den Zeitpunkt der Überschreitung, indem von diesem die bestimmte Erfassungsverzögerung abgezogen wird.

5. Vorrichtung nach Anspruch 4, **dadurch gekennzeichnet, dass** das Schätzungsmodul (70) für die Erfassungsverzögerung in der Lage ist, diese gemäß dem Verhältnis zu schätzen:

$$T_{det} = \frac{\alpha}{a.\Delta V_{int} + b} + \beta$$

worin $\Delta V_{int}$ eine Veränderung der Spannung ist, die der auf das lichtempfindliche Element einfallenden Strahlung entspricht, und a, b, $\alpha$ und $\beta$ vorbestimmte Parameter sind.

6. Vorrichtung nach einem der vorhergehenden Ansprüche, **dadurch gekennzeichnet, dass** die Schwellenspannung des Komparators (52) auf eine Spannung geregelt wird, die im Wesentlichen gleich $V_{comp} + V_{offset}^{CTIA} + V_{offset}^{comparateur}$ ist, worin

- $V_{comp}$ eine vorbestimmte Spannung ist,

- $V_{offset}^{CTIA}$ eine Versatzspannung des Integrators ist,

- und $V_{offset}^{comparateur}$ eine Versatzspannung des Komparators ist.

7. Vorrichtung nach Anspruch 6, **dadurch gekennzeichnet,**

- **dass** sie umfasst:

■ einen ersten Schalter (80), der geeignet ist, den Ausgang des Komparators (52) auf dessen Schwellenspannungseingang aufzuschalten,
■ einen dritten Kondensator (82), der zwischen dem Schwellenspannungseingang des Komparators und dem ersten Anschluss eines zweiten und dritten Schalters (84, 86) angeschlossen ist, wobei der zweite Anschluss des dritten Kondensators (82) an die Masse bzw. an Einrichtungen angeschlossen ist, die geeignet sind, beim Schließen des dritten Schalters (86) eine Potentialveränderung ($\Delta V$) jedes der Anschlüsse des dritten Kondensators (82) hervorzurufen,

- und **dass** die Schwellenspannung des Komparators geregelt wird, indem der erste und zweite Schalter (80, 84) geschlossen werden und der dritte Schalter (86) geöffnet wird, dann der erste und zweite Schalter (80, 84) geöffnet werden und der dritte Schalter (86) geschlossen wird.

8. Bildgebungsmatrix mit einer Mehrzahl an Vorrichtungen nach einem der vorhergehenden Ansprüche.

9. 3D-Aktivbildgebungssystem mit einer steuerbaren Strahlungsquelle und einer Erfassungsmatrix, die in der Lage ist, eine Strahlung zu erfassen, die von der Quelle abgegeben und von Hindernissen reflektiert wird, **dadurch gekennzeichnet, dass** die Erfassungsmatrix eine Mehrzahl an Vorrichtungen nach einem der Ansprüche 1 bis 7 umfasst.

## Claims

1. A device comprising a photosensitive element (42) producing an electric charge as a function of the radiation (44) incident thereon, and a means for measuring and for time-stamping an incident radiation on the photosensitive element, said means comprising a charge integrator (46, 48, 50) connected to the photosensitive element and converting the charge into a voltage, a comparator (52) capable of comparing the voltage delivered by the integrator (46, 48, 50) with a threshold voltage, and a memory block (56) storing the instant when the voltage delivered by the integrator exceeds the threshold voltage, *characterized:*

   - **in that** the integrator has a variable amplification gain and comprises means for applying, during a integration time window in the course of which the integrator integrates charges produced by the photosensitive element as a function of the radiation incident:

      ■ a first amplification gain of the integrator from the instant of arrival of the incident radiation up to the instant when the voltage delivered by the integrator exceeds the threshold voltage; and
      ■ a second amplification gain of the integrator, lower that the first amplification gain, after the instant when the voltage delivered by the integrator exceeds the threshold value for allowing the integration of all the incident radiation,

   - and **in that** said stored instant when the threshold voltage is exceeded constitutes a time-stamping of the beginning of the radiation incident on the photosensitive element.

2. The device as claimed in claim 1, *characterized:*

   - **in that** the integrator (46, 48, 50) comprises operational amplifier (46) which is feedback by a first capacitor (48) and by a second switchable capacitor (50), the first capacitor (46) having a capacitance which is less than that of second capacitor (50);
   - and **in that** the second capacitor (50) is capable of being connected in parallel with first capacitor (48) after the instant when the threshold voltage is exceeded.

3. The device as claimed in claim 3, *characterized* **in that** the capacitance of the first capacitor (48) is selected depending on the desired accuracy for the instant when the threshold voltage is exceeded.

4. The device as claimed in any one of the preceding claims, *characterized* **in that** it comprises:

   - a module (70) for estimating a detection delay, which corresponds to the instant when the radiation on the photosensitive element starts and the instant when the threshold voltage is exceeded, as a function of the voltage delivered by integrator (46, 48, 50),
   - and a module (72) for correcting the instant when the threshold is exceeded by subtracting the determined detection delay from said instant.

5. The device as claimed in claim 4, *characterized* **in that** the module (70) for estimating the detection delay is capable of estimating the detection delay in accordance with the equation:

$$T_{det} = \frac{\alpha}{a.\Delta V_{int} + b} + \beta$$

where $\Delta V_{int}$ is a variation in voltage corresponding to the incident radiation on the photosensitive element and a, b, $\alpha$ and $\beta$ are predetermined parameters.

6. The device as claimed as claimed in any one of the preceding claims, ***characterized* in that** the threshold voltage of the comparator (52) is adjusted to a voltage which is substantially equal to $V_{comp} + V_{offset}^{CTIA} + V_{offset}^{comparator}$, where:

    - $V_{comp}$ is a predetermined voltage,

    - $V_{offset}^{CTIA}$ is an offset voltage of the integrator,

    - and $V_{offset}^{comparator}$ is an offset voltage of the comparator.

7. The device as claimed in claim 7, ***characterized*:**

    - **in that** it comprises:

        ■ a first switch (80) capable of connecting the output of the comparator (52) to the latter's threshold voltage input,
        ■ a third capacitor (82), connected between the threshold voltage input of the comparator and to the first terminal of a second and third switches (84, 86), the second terminal of third capacitor being connected respectively to ground and to means capable of producing a variation of potential ($\Delta V$) of each of the terminals of the third capacitor (82) when third switch (86) is closed; and

    - and **in that** the threshold voltage of the comparator is adjusted by closing the first and second switches (80, 84) and by opening third switch (86), then by opening the first and second switches (80, 84) and by closing third switch (86).

8. An imaging array comprising a plurality of devices according any one of the preceding claims.

9. A 3D active imaging system comprising a controllable radiation source and a detection array capable of detecting radiation originating from said source and reflected by obstacles, ***characterized* in that** the detection array comprises a plurality of devices according to any one of claims 1 to 7.

Distance de la zone observée          Zone observée

T1  12                            22

Fenêtres d'observation
(<< tranches >>)

14                                24
T2                                      26

16        impulsions LASER
T3        successives

18                                          28
T4

**Fig. 1**

10                Brouillard    30        32    Arrière plan

LASER
&
détecteur

Premier plan:
obstructions-camouflage

0    10 m          T1                              6Km    mètres

**Fig. 2**            20

40                                        Sorties pixel:
                                          ▷ flux réfléchi

44              46              52    Base de    Mémorisation  ▷ datation
                                     temps

Vréf  +  TIA      N1      +      N2  Bloqueur  N3    56
         -              Vseuil  -
                                        54

42  Iin    48
          C 3D

           50
          C 2D

    58

    60

RAZ

**Fig. 3**

14

**Fig. 4**

$I_{in}$

$I_p$

$T_P$

t

**Fig. 5**

$V(N1)$

Vseuil

Vini

t

**Fig. 6**

$V(N3)$

RAZ

RAZ

t

$T_0$   $T_1$   $T_2$   $T_3$   $T_0 +$
Ttrame

Tdet

Sorties pixel:

72

⯈ flux réfléchi

Base de
temps   Mémorisation   +   ⊗ ⯈ datation
                         −

44

46   52   56

Vréf ⯈   + TIA   N1   + ⌐⌐   N2   Bloqueur   N3

                  Vseuil ⯈   −

                              54

48   $C_{3D}$

42   $I_{in}$

50   $C_{2D}$

58   Compenseur

60   70

RAZ ⯈

**Fig. 7**

**Fig. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6133989 A
- US 7206062 A
- US 2006007422 A
- US 6522395 B
- FR 2656485 A

**Littérature non-brevet citée dans la description**

- **I. BAKER ; S. DUNCAN ; J. COPLEY.** A low noise, laser-gated imaging system for long range target identification. *Proceedings of SPIE,* vol. 5406, 133-144
- **M. BROWDER et al.** 3D imaging laser radar. *Proceedings of SPIE,* vol. 4377, 73-83